Europäisches Patentamt

European Patent Office

Office européen des brevets

(11) Veröffentlichungsnummer: **0 043 026**
**B1**

(12) **EUROPÄISCHE PATENTSCHRIFT**

(45) Veröffentlichungstag der Patentschrift:
04.04.84

(21) Anmeldenummer: 81104626.7

(22) Anmeldetag: 16.06.81

(51) Int. Cl.³: **H 02 M 7/515**

(54) Verfahren und Einrichtung zur Steuerung eines lastgeführten Parallelschwingkreiswechselrichters beim Startvorgang.

(30) Priorität: 26.06.80 DE 3023985

(43) Veröffentlichungstag der Anmeldung:
06.01.82 Patentblatt 82/1

(45) Bekanntmachung des Hinweises auf die Patenterteilung:
04.04.84 Patentblatt 84/14

(84) Benannte Vertragsstaaten:
BE FR GB

(56) Entgegenhaltungen:
DE - C - 1 613 761
GB - A - 1 153 910
GB - A - 1 217 581

(73) Patentinhaber: BROWN, BOVERI & CIE
Aktiengesellschaft, Kallstadter Strasse 1,
D-6800 Mannheim 31 (DE)

(72) Erfinder: Drees, Gerd Wilhelm, Dipl.-Ing.,
Geschwister-Scholl-Strasse 55, D-4619 Bergkamen (DE)
Erfinder: Kieffer, Ferdinand, Am Zippen 26,
D-4600 Dortmund-Körne (DE)
Erfinder: Fabianowski, Jan, Dr.,
Mitklaszewskiego 13M28, Warschau (PL)

(74) Vertreter: Kempe, Wolfgang, Dr. et al, c/o BROWN,
BOVERI & CIE AG Kallstadter Strasse 1,
D-6800 Mannheim-Käfertal (DE)

## Verfahren und Einrichtung zur Steuerung eines lastgeführten Parallelschwingkreiswechselrichters beim Startvorgang

Die Erfindung bezieht sich auf ein Verfahren und eine Einrichtung zur Steuerung eines lastgeführten Parallelschwingkreiswechselrichters mit Hilfe eines Schaltungsmittels, dem die Summe verhältnisgleicher Größen der Wechselrichter-Ausgangsspannung, der Ausgangsspannungssteilheit sowie des Wechselrichter-Eingangsstromes zugeführt werden und das durch Umkippen von einem Signalzustand in den anderen Signalzustand die Zündimpulse für die Wechselrichterventile auslöst.

Ein derartiges Verfahren ist aus der DE-C-1 613 761 bekannt. Parallelschwingkreiswechselrichter dienen beim induktiven Erwärmen und Schmelzen zur Versorgung des Lastkreises mit Mittelfrequenz-Energie. Bei der aus der DE-C-1 613 761 bekannten Einrichtung erfolgt die Bildung der Wechselrichter-Zündimpulse über Summierverstärker mit nachgeschalteter bistabiler Kippstufe. Dazu werden die Wechselrichter-Ausgangsspannung, die Ausgangsspannungssteilheit und der Wechselrichter-Eingangsstrom vorzeichenbehaftet summiert. Die Zeitpunkte für die Auslösung der Zündimpulse werden so gelegt, daß über einen lastabhängigen Voreilwinkel die Schonzeit der Ventile ihren kleinsten Wert bei Nennlast erreicht. Damit wird der optimal mögliche Leistungsfaktor des Parallelschwingkreis-Wechselrichters erzielt.

Dieses bekannte Verfahren hat den Nachteil, daß beim Startvorgang unter extrem schwierigen Lastkreisverhältnissen — wie beispielsweise bei sehr geringer Güte und hoher Dämpfung (Kaltstart) — die zur Anfachung der Lastkreisschwingungen aus einer Starteinrichtung bezogene Startenergie schnell entladen ist. Der Wechselrichtereingangsstrom steigt relativ langsam. Die Spannung im Lastkreis bleibt zunächst klein. Das Verhältnis zwischen Strom und Spannung ist sehr ungünstig. Die Kommutierungsvorgänge im Wechselrichter dauern im Extremfall so lange, daß für die Ventile nicht genügend Schonzeit bleibt, da mit dem bekannten Verfahren die Zündzeitpunkte nicht genügend zeitlich voreilend ausgelöst werden. Damit ist ein sicherer Startvorgang gefährdet.

Der Erfindung liegt die Aufgabe zugrunde, ein Verfahren zur Steuerung eines lastgeführten Parallelschwingkreiswechselrichters zu entwickkeln, das bei jedem möglichen Lastkreisverhältnis einen sicheren Startvorgang mit genügend voreilenden Zündzeitpunkten der Ventile gewährleistet.

Diese Aufgabe wird erfindungsgemäß dadurch gelöst, daß zu den drei genannten Größen Wechselrichter-Ausgangsspannung, Ausgangsspannungssteilheit und Wechselrichter-Eingangsstrom ein zu Beginn des Startvorganges des Wechselrichters seinen Höchstwert aufweisendes, sich während des Startvorganges kontinuierlich verminderndes und einige Schwingungsperioden nach dem Beginn des Startvorganges abgeklungenes Zusatzsignal hinzu addiert wird.

Die mit der Erfindung erzielbaren Vorteile bestehen insbesondere darin, daß durch die vorgenommene Beeinflussung der Steuerung der Wechselrichter-Zündimpulse während des Startvorganges eine Starterleichterung erfolgt. Es wird erreicht, daß die Zündzeitpunkte im Startaugenblick zeitlich so weit voreilend liegen, daß auch bei extrem langen Kommutierungszeiten noch genügend Schonzeit für die Ventile verbleibt.

Vorteilhafte Einrichtungen zur Durchführung des erfindungsgemäßen Vefahrens sind den Ansprüchen 2 bis 4 entnehmbar.

Ein Ausführungsbeispiel der Erfindung ist im folgenden anhand der Zeichnungen erläutert.

Es zeigt

Fig. 1 ein Blockschaltbild der Zündeinsatzsteuerung mit zwei getrennten Wegen zur Erzeugung der um 180° versetzten Zündimpulse,

Fig. 2 ein Blockschaltbild der Zündeinsatzsteuerung mit einem gemeinsamen Weg zur Erzeugung der um 180° versetzten Zündimpulse,

Fig. 3 eine schaltungstechnische Ausführung der Anordnung gemäß Fig. 2,

Fig. 4 den zeitlichen Verlauf der zu summierenden Signale und die Lage der Zündzeitpunkte.

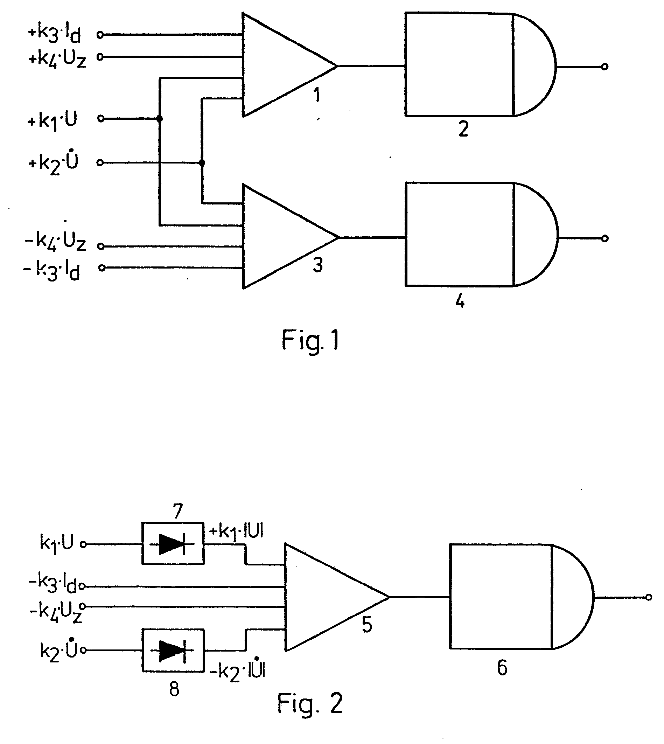

In Fig. 1 ist ein Blockschaltbild der Zündeinsatzsteuerung mit zwei getrennten Wegen zur Erzeugung der um 180° versetzten Zündimpulse dargestellt. Es sind zwei Summierverstärker 1 und 3 vorgesehen, die jeweils mit einem bistabilen Kippglied 2 und 4 beschaltet sind. Dem Summierverstärker 1 werden eingangsseitig eine der Wechselrichter-Ausgangsspannung $U$ proportionale Größe $+K_1 \cdot U$, eine der Ausgangsspannungssteilheit $du/dt$ proportionale Größe $+K_2 \cdot \dot{U}$, eine dem Wechselrichter-Eingangsstrom $I_d$ proportionale Größe $+K_3 \cdot I_d$ sowie eine einem Zusatzsignal $u_z$ proportionale Größe $+K_4 \cdot U_Z$ zugeführt. $K_1$, $K_2$, $K_3$ und $K_4$ sind dabei Proportionalitätsfaktoren. Bei den einzelnen Summanden handelt es sich stets um Ströme, so daß die Proportionalitätsfaktoren $K_1$, $K_2$ und $K_4$ dimensionsbehaftet sind. Dem Summierverstärker 3 werden die Größen $+K_1 \cdot U$, $+K_2 \cdot \dot{U}$, $-K_3 \cdot I_d$ sowie $-K_4 \cdot U_z$ zugeführt.

Am Ausgang des Summierverstärkers 1 steht die Summe der Ströme

$$K_1 \cdot U + K_2 \cdot \dot{U} + K_3 \cdot I_d + K_4 \cdot U_Z$$

an. Das bistabile Kippglied 2 gibt an seinem Ausgang den Zündimpuls dann ab, wenn der Summenstrom vom Negativen ins Positive übergeht.

Am Ausgang des Summierverstärkers 3 steht die Summe der Ströme

$$K_1 U + K_2 \dot{U} - K_3 I_d - K_4 U_Z$$

an. Das bistabile Kippglied 4 gibt an seinem Ausgang den um 180° versetzten Zündimpuls dann ab, wenn der Summenstrom vom Positiven ins Negative wechselt.

Die Anordnung gemäß Fig. 1 sieht zwei getrennte Wege zur Steuerung des Zündimpulseinsatzes für die beiden um 180° versetzten Zündimpulse der beiden Ventilgruppen des Wechselrichters vor. Sind nun Differenzen im Nullpunkt-, Phasen- und Amplitudenfehler der beiden Summierverstärker 1, 3 sowie unterschiedliche Schwellwerte und Laufzeiten in den beiden bistabilen Kippgliedern 2, 4 vorhanden, dann treten unsymmetrische, d. h. nicht mehr genau um 180° verschobene Zündimpulse auf.

In einer in Fig. 2 dargestellten weiteren Ausführung werden deshalb zur Zündimpulsauslösung nur ein Summierverstärker 5 und ein bistabiles Kippglied 6 verwendet. Fehler wirken sich dann gleichmäßig auf beide Zündimpulse aus. Dem Summierverstärker 5 werden über einen Zweiweggleichrichter 7 der positive ungeglättete Gleichrichtwert $+K_1 \mid U \mid$ der der Ausgangsspannung proportionalen Größe $K_1 \cdot U$, über einen zweiten Zweiweggleichrichter 8 der negative ungeglättete Gleichrichtwert $-K_2 \cdot \mid \dot{U} \mid$ der der Ausgangsspannungssteilheit proportionalen Größe $K_2 \cdot \dot{U}$ und direkt die negative, dem Gleichstrom proportionale Größe $-K_3 \cdot I_d$ sowie die dem Zusatzsignal $U_Z$ proportionale Größe $-K_4 \cdot U_Z$ zugeführt. Beim Polaritätswechsel der Summe vom Positiven ins Negative, der in einer Periode der Ausgangsspannung zweimal erfolgt und vom bistabilen Kippglied 6 erfaßt wird, werden abwechselnd die beiden Ventilgruppen des Wechselrichters gezündet.

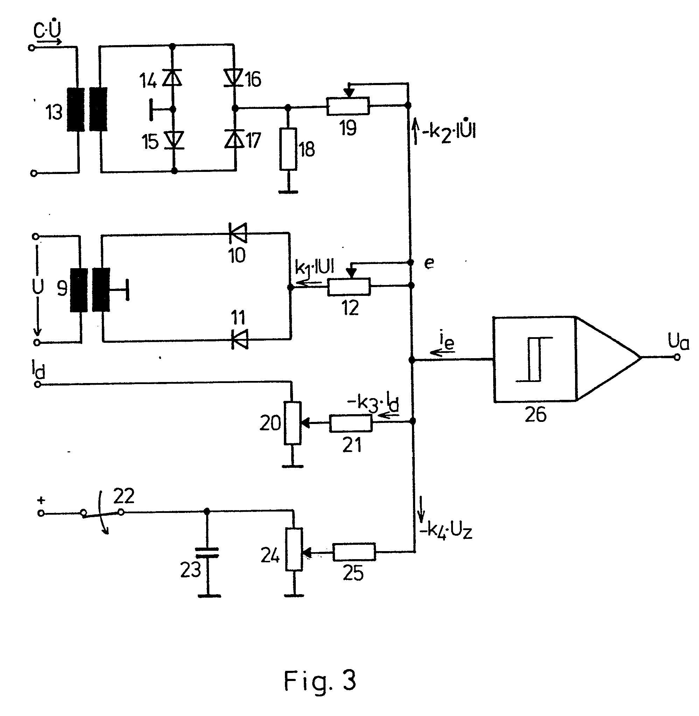

In Fig. 3 ist eine schaltungstechnische Ausführung der Anordnung gemäß Fig. 2 dargestellt. Über die Primärwicklung eines Spannungswandlers 9 wird die Wechselrichter-Ausgangsspannung U in die Zündeinsatzsteuerung eingespeist. Die Sekundärwicklung des Spannungswandlers 9 hat eine Mittelanzapfung, die auf Null-Potential liegt und bildet zusammen mit zwei Dioden 10,11 einen Gleichrichter in Mittelpunktschaltung. Die Anoden der Dioden 10,11 sind zusammengeschaltet und über einen einstellbaren Widerstand 12 mit dem Summationspunkt e verbunden. Mit dem Widerstand 12 ist der Proportionalitätsfaktor $K_1$ einstellbar, so daß die Größe $K_1 \mid U \mid$ in den Summationspunkt e eingespeist wird.

Über die Primärwicklung eines Stromwandlers 13 wird der der Ausgangsspannungssteilheit du/dt proportionale Ladestrom $C \cdot \dot{U}$ eines zum Ausgang des Wechselrichters parallel geschalteten Kondensators C, der in der Fig. 3 nicht dargestellt ist, in die Zündeinsatzsteuerung eingespeist. Die Sekundärwicklung des Stromwandlers 13 speist einen aus vier Dioden 14, 15, 16, 17 bestehenden Gleichrichter in Brückenschaltung. Die verbundenen Anoden der Dioden 14 und 15 liegen auf Null-Potential. Die verbundenen Kathoden der Dioden 16, 17 liegen über einen Widerstand 18 auf Null-Potential und sind über einen einstellbaren Widerstand 19 mit dem Summationspunkt e verbunden. Der Widerstand 19 dient zur Einstellung des Proportionalitätsfaktors $K_2$, so daß die Größe $K_2 \mid \dot{U} \mid$ in den Summationspunkt e eingespeist wird.

Der Wechselrichter-Eingangsstrom $I_d$ wird der Zündeinsatzsteuerung über einen einstellbaren Widerstand 20 sowie einen weiteren, mit einem Abgriff des Widerstandes 20 verbundenen Widerstand 21 zugeführt. Der Widerstand 20 liegt dabei mit seinem Anschluß auf Null-Potential und dient zur Einstellung des Proportionalitätsfaktors $K_3$, so daß die Größe $K_3 \cdot I_d$ in den Summationspunkt e eingespeist wird.

Zur Einspeisung der Größe $K_4 \cdot U_Z$ in die Zündeinsatzsteuerung dient eine RC-Kombination, bestehend aus einem Kondensator 23 und einem Widerstand 24. Jeweils eine der Anschlußklemmen von Kondensator 23 und Widerstand 24 liegen auf Null-Potential, während die jeweils weiteren Anschlußklemmen zusammengeschaltet und mit einem Schalter 22 verbunden sind. Ein weiterer Widerstand 25 ist mit einem Abgriff des Widerstandes 24 sowie mit dem Summationspunkt e verbunden. Der ausgangsseitige Strom des Widerstandes 25 beträgt $K_4 \cdot U_Z$.

Die Aufladung des Kondensators 23 über den geschlossenen, mit einer positiven Spannungsquelle verbundenen Schalter 22 erfolgt im Aus-Zustand des Wechselrichters. Zu Beginn des Startvorgangs des Wechselrichters wird der Schalter 22 geöffnet und der Kondenstor 23 entlädt sich über den Widerstand 24. Hierbei bestimmen die Größe der Kapazität des Kondensators 22 die zeitliche Dauer des sich zeitlich vermindernden Zusatzsignals $U_Z$ und der ohmsche Wert des Widerstandes 24 die zusätzliche Anfangsverschiebung der Zündzeitpunkte gegenüber dem Normalbetrieb.

Die über den Summationspunkt e eingespeiste Summe $i_e$ der Ströme

$$K_1 \mid U \mid + K_2 \mid \dot{U} \mid + K_3 \cdot I_d + K_4 \cdot U_Z$$

wird einem Schaltungsmittel 26 zugeleitet, das von seiner Funktion her einen Summierverstärker mit einem bistabilen Kippglied vereinigt. Das Schaltungsmittel 26 gibt bei jedem Polaritätswechsel des Summenstromes $i_e$ vom Positiven ins Negative, der in einer Periode der Wechselrichter-Ausgangsspannung U zweimal erfolgt, einen Zündimpuls zur Abwechselnden Zündung der beiden Ventilgruppen des Wechselrichters ab. Die Ausgangsspannung des Schaltungsmittels 26 ist mit $U_a$ bezeichnet und gibt die zeitliche Abfolge der Zündimpulse an.

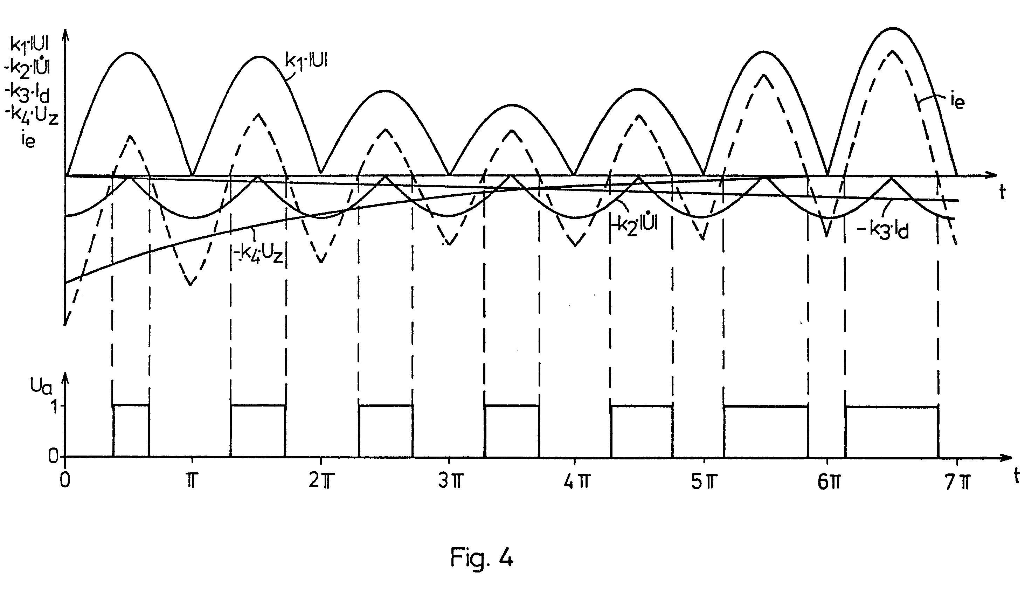

Der zeitliche Verlauf der zu summierenden Ströme $K_1 \mid U \mid$, $K_2 \mid \dot{U} \mid$, $K_3I_d$, $K_4U_Z$, der Summenstrom $i_e$ und die Lage der Zündzeitpunkte, repräsentiert durch die Ausgangsspannung $U_a$ des Schaltungsmittels 26 sind in Fig. 4 dargestellt. Im oberen Teil der Fig. 4 ist der Verlauf der einzelnen summenbildenden Ströme und des Summenstromes $i_e$ über der Zeitachse t aufgetragen. Mit $K_1 \cdot \mid U \mid$ ist der ungeglättete, positive Gleichrichtwert des der Wechselrichterausgangsspannung proportionalen Stromes bezeichnet; er verläuft oberhalb der Zeitachse t. Unterhalb der Zeitachse sind der negative ungeglättete Gleichrichtwert $K_2 \cdot | \dot{U} |$ des der Ausgangsspannungssteilheit proportionalen Stromes eingezeichnet, ebenso wie der dem Wechselrichtereingangsstrom proportionale Strom $K_3 \cdot I_d$.

Das Zusatzsignal $K_4 \cdot U_Z$ verläuft unterhalb der Zeitachse t. Es weist zu Beginn des Startvorganges des Wechselrichters seinen Höchstwert auf und nähert sich mit zunehmender Zeit der t-Achse. Das Zusatzsignal $K_4 \cdot U_Z$ ist einige Schwingungsperioden nach dem Beginn des Startvorganges abgeklungen.

Aus der Addition dieser vier Ströme ergibt sich der Summenstrom $i_e$, der einen etwa dreieckförmigen Verlauf beiderseits der Zeitachse hat. Im unteren Teil ist der Verlauf der Ausgangsspannung $U_a$ des Schaltungsmittels 26 über der Zeit und in Abhängigkeit von dem Nulldurchgang des Summenstromes $i_e$ aufgetragen. Bei jedem Vorzeichenwechsel des Summenstromes $i_e$ vom Positiven zum Negativen erfolgt ein Wechsel der Spannung $U_a$ von dem Wert 1 auf den Wert 0. Dieser Spannungssprung markiert jeweils den Zündimpuls.

Mit Hilfe des zeitlich abklingenden Zusatzsignales $K_4 \cdot U_Z$ wird erreicht, daß die Zündzeitpunkte im Startaugenblick zeitlich soweit voreilend liegen, daß auch bei extrem langen Kommutierungszeiten noch genügend Schonzeit für die Ventile verbleibt. Mit dem Abklingen des Zusatzsignales $K_4 U_Z$ wandern die Zündzeitpunkte gleitend in den durch die Größen U, $\dot{U}$, und $I_d$ normalerweise bestimmten Zeitpunkt. Dann ist auch die Lastkreisspannung soweit gestiegen, daß die aus der DE-C-1 613 761 bekannte Steuerung den Normalbetrieb sicher übernehmen kann.

**Patentansprüche**

1. Verfahren zur Steuerung eines lastgeführten Parallelschwingkreiswechselrichters mit Hilfe eines Schaltungsmittels, dem die Summe verhältnisgleicher Größen der Wechselrichter-Ausgangsspannung (U), der Ausgangsspannungssteilheit ($\dot{U}$) sowie des Wechselrichter-Eingangsstromes ($I_d$) zugeführt werden und das durch Umkippen von einem Signalzustand in den anderen Signalzustand die Zündimpulse ($U_a$) für die Wechselrichterventile auslöst, dadurch gekennzeichnet, daß zu den drei genannten Größen Wechselrichter-Ausgangsspannung (U), Ausgangsspannungssteilheit ($\dot{U}$) und Wechselrichter-Eingangsstrom ($I_d$) ein zu Beginn des Startvorganges des Wechselrichters seinen höchsten Wert aufweisendes, sich während des Startvorganges kontinuierlich verminderndes und einige Schwingungsperioden nach dem Beginn des Startvorganges abgeklungenes Zusatzsignal ($U_Z$) hinzu addiert wird.

2. Einrichtung zur Durchführung des Verfahrens nach Anspruch 1, dadurch gekennzeichnet, daß ein Schalter (22) mit seinem ersten Anschluß an einer positiven Spannungsquelle und mit seinem zweiten Anschluß an einem Kondensator (23) mit parallel geschalteten Widerstand (24) angeschlossen ist, wobei der Schalter (22) zu Beginn des Startvorganges des Wechselrichters geöffnet wird und an einem Abgriff des Widerstandes (24) die dem Zusatzsignal ($U_Z$) proportionale Größe ($K_4 \cdot U_Z$) entnehmbar ist (Fig. 3).

3. Einrichtung nach Anspruch 2, dadurch gekennzeichnet, daß das Schaltungsmittel aus zwei Summierverstärkern (1, 3) mit nachgeschalteten bistabilen Kippgliedern (2, 4) besteht, wobei der der Wechselrichter-Ausgangsspannung (U) proportionale Summand ($K_1 \cdot U$) und der der Ausgangsspannungssteilheit ($\dot{U}$) proportionale Summand ($K_2 \cdot \dot{U}$) den Summierverstärkern (1, 3) mit gleicher Polarität und der dem Wechselrichter-Eingangsstrom ($I_d$) proportionale Summand ($K_3 \cdot I_d$) sowie der dem Zusatzsignal ($U_Z$) proportionale Summand ($K_4 \cdot U_Z$) den Summierverstärkern (1, 3) mit entgegengesetzten Polaritäten zugeführt werden (Fig. 1).

4. Einrichtung nach Anspruch 2, dadurch gekennzeichnet, daß das Schaltungsmittel aus einem Summierverstärker (5) mit nachgeschaltetem bistabilen Kippglied (6) besteht, wobei dem Summierverstärker (5) der positive Wert der der Wechselrichterausgangsspannung (U) proportionalen Größe ($K_1 | U |$) über einen Zweiweg-Gleichrichter (7), der negative Wert der der Ausgangsspannungssteilheit ($\dot{U}$) proportionalen Größe ($K_2 | \dot{U} |$) über einen Zweiweggleichrichter (8) sowie die negativen Werte der dem Wechselrichter-Eingangsstrom ($I_d$) proportionalen Größe ($- K_3 \cdot I_d$) und der dem Zusatzsignal ($U_Z$) proportionalen Größe ($- K_4 \cdot U_Z$) zugeführt werden (Fig. 2).

**Claims**

1. A method for controlling a load-commutated parallel oscillating circuit invertor with the aid of a switching means, to which the sum of proportional magnitudes of the invertor output voltage (U), the output voltage slope ($\dot{U}$) and the invertor input current ($I_d$) are supplied, and which, by changing over from one signal state to the other signal state, triggers the firing pulses ($U_a$) for the invertor valves, characterized in that an additional signal ($U_Z$), which at the beginning of the starting process of the invertor has its highest value, continually decreases during the starting process and a few oscillation periods after the beginning of the starting process dies away, is added to the three mentioned magnitudes of the invertor output voltage (U), the output voltage slope ($\dot{U}$) and the invertor input current ($I_d$).

2. A device for carrying out the method according to claim 1, characterized in that a switch (22), with its first connection at a positive voltage source and with its second connection at a capacitor (23), is connected to a resistor (24) connected in a parallel manner, and the switch (22) is opened at the beginning of the starting process of the invertor and the magnitude $(K_4 \cdot U_Z)$ proportional to the additional signal $(U_Z)$ can be derived at a tap of the resistor (24) (Fig. 3).

3. A device according to claim 2, characterized in that the switching means consist of two summing amplifiers (1, 3) with bistable trigger circuits (2, 4) connected downstream, the addend $(K_1 \cdot U)$ proportional to the invertor output voltage (U) and the addend $(K_2 \cdot \dot{U})$ proportional to the output voltage slope $(\dot{U})$ being supplied to the summing amplifiers (1, 3) with the same polarity and the addend $(K_3 \cdot I_d)$ proportional to the invertor input current $(I_d)$ and the addend $(K_4 \cdot U_Z)$ proportional to the additional signal $(U_Z)$ being supplied to the summing amplifiers (1, 3) with opposite polarities (Fig. 1).

4. A device according to claim 2, characterized in that the switching means consist of a summing amplifier (5) with a bistable trigger circuit (6) which is connected downstream, the positive value of the magnitude $(K_1 | U |)$ proportional to the invertor output voltage (U) being supplied via a full-wave rectifier (7) to the summing amplifier (5), the negative value of the magnitude $(K_2 | \dot{U} |)$ proportional to the output voltage slope $(\dot{U})$ being supplied via a full-wave rectifier (8) to the summing amplifier (5) and the negative values of the magnitude $(- K_3 \cdot I_d)$ proportional to the invertor input current $(I_d)$ and of the magnitude $(- K_4 \cdot U_Z)$ proportional to the additional signal $(U_Z)$ being supplied to the summing amplifier (5) (Fig. 2).

## Revendications

1. Procédé pour commander un onduleur à circuit oscillant parallèle, à commutation par la charge, à l'aide d'un moyen de commutation auquel est appliquée la somme de grandeurs proportionelles de la tension de sortie (U) de l'onduleur, de la pente $(\dot{U})$ de la tension de sortie ainsi que du courant d'entrée $(I_d)$ de l'onduleur et qui déclenche, par basculement d'une condition de signal dans l'autre condition de signal, les impulsions d'amorçage $(U_a)$ des valves de l'onduleur, procédé caractérisé en ce qu'on ajoute aux trois valeurs mentionnées, tension de sortie (U) de l'onduleur, pente $(\dot{U})$ de la tension de sortie et courant d'entrée $(I_d)$ de l'onduleur, un signal additionnel $(U_Z)$ présentant au début du processus de démarrage de l'onduleur sa valeur la plus grande, diminuant de façon continue pendant le processus de démarrage et amorti quelques périodes d'oscillations après le début du processus de démarrage.

2. Dispositif pour mettre en oeuvre le procédé selon la revendication 1, caractérisé en ce qu'un commutateur (22) est raccordé à sa première borne à une source de tension positive et à sa deuxième borne à un condensateur (23) ayant une résistance (24) montée en parallèle, le commutateur (22) étant ouvert au début du processus de démarrage de l'onduleur et la grandeur $(K_4 \cdot U_Z)$ proportionnelle au signal additionnel $(U_Z)$ pouvant être tiré d'une prise de la résistance (24) (figure 3).

3. Dispositif selon la revendication 2, caractérisé en ce que le moyen de commutation est constitué par deux amplificateurs de sommation (1, 3) ayant des éléments basculants (2, 4) bistables montés en aval, l'opérande de somme $(K_1 \cdot U)$ proportionnel à la tension de sortie (U) de l'onduleur et l'opérande de somme $(K_2 \cdot \dot{U})$ proportionnel à la pente (U) de la tension de sortie étant appliqués aux amplificateurs de sommation (1, 3) avec la même polarité et l'opérande de somme $(K_3 \cdot I_d)$ proportionnel au courant d'entrée $(I_d)$ de l'onduleur ainsi que l'opérande de somme $(K_4 \cdot U_Z)$ proportionnel au signal additionnel $(U_Z)$ étant appliqués aux amplificateurs de sommation (1, 3) avec des polarités inverses (figure 1).

4. Dispositif selon la revendication 2, caractérisé en ce que le moyen de commutation est constitué par un amplificateur de sommation (5) ayant un élément basculant bistable (6) monté en aval, et en ce qu'on ajoute à l'amplificateur de sommation (5) la valeur positive de la grandeur $(K_1 | U |)$ proportionnelle à la tension de sortie (U) de l'onduleur par l'intermédiaire d'un redresseur à deux voies (7), la valeur négative de la grandeur $(K_2 | \dot{U} |)$ proportionnelle à la pente $(\dot{U})$ de la tension de sortie par l'intermédiaire d'un redresseur à deux voies (8) ainsi que les valeurs négatives de la grandeur $(- K_3 \cdot I_d)$ proportionnelle au courant d'entrée $(I_d)$ de l'onduleur et la grandeur $(- K_4 \cdot U_Z)$ proportionnelle au signal additionnel $(U_Z)$ (figure 2).

Fig. 1

Fig. 2

7

Fig. 3

Fig. 4

0 043 026